# EUROPÄISCHE PATENTSCHRIFT

(11) **EP 1 520 624 B1**
(45) Veröffentlichungstag und Bekanntmachung des Hinweises auf die Patenterteilung: **29.03.2006**
(21) Anmeldenummer: 04020709.4
(22) Anmeldetag: 01.09.2004
(51) Int. Cl.: B01L 3/02

(54) **Pipettenspitze**
Pipette tip
Embout pour pipette

(30) Priorität: 30.09.2003 DE 10345324
(43) Veröffentlichungstag der Anmeldung: 06.04.2005
(73) Patentinhaber: EPPENDORF AG, 22339 Hamburg (DE)
(72) Erfinder: Löhn, Jürgen, 27419 Klein Meckelsen (DE)
(74) Vertreter: Hauck, Graalfs, Wehnert, Döring, Siemons

(56) Entgegenhaltungen:
- DE-A- 19 917 375
- DE-U- 29 907 055
- DE-U- 29 914 295
- US-A- 4 072 330
- US-A- 4 721 680

## Beschreibung

Die Erfindung bezieht sich auf eine Pipettenspitze.

Pipettenspitzen werden zusammen mit Pipettiervorrichtungen zum Dosieren von Flüssigkeiten verwendet. Pipettenspitzen haben einen länglichen, rohrförmigen Körper, der an dem unteren Ende eine Pipettieröffnung und an dem oberen Ende eine Aufstecköffnung zum Aufstecken auf einen Aufnahmeschaft der Pipettiervorrichtung hat. Der Aufnahmeschaft ist zumeist konisch geformt. Bekannt sind aber auch zylindrische Aufnahmeschäfte bzw. Mischformen. Ferner konische bzw. zylindrische Aufnahmeschäfte, die umlaufende Wulste oder dgl. zur Verstärkung der Dicht- bzw. Klemmwirkung haben. Die Pipettiervorrichtung umfaßt eine Gasverdrängungseinrichtung, die zumeist als Kolben-Zylinder-Einheit ausgeführt ist. Die Gasverdrängungseinrichtung ist mit einer Durchgangsöffnung des Aufnahmeschaftes verbunden. Die Pipettenspitze wird durch Eindrücken des Aufnahmeschaftes der Pipettiervorrichtung in die Aufstecköffnung der Pipettenspitze an der Pipettiervorrichtung fixiert.

Mittels der Gasverdrängungseinrichtung wird eine Gassäule verschoben, um Flüssigkeit in die auf den Aufnahmeschaft gesteckte Pipettenspitze einzusaugen oder aus dieser auszustoßen. Zumeist ist die Gassäule eine Luftsäule. Wird die Gassäule von der Pipettenspitze weg verschoben, wird eine bestimmte Flüssigkeitsmenge durch die Pipettieröffnung in den rohrförmigen Körper eingesogen. Durch Verschieben der Gassäule zur Pipettenspitze hin wird eine Flüssigkeitsmenge aus dem rohrförmigen Körper durch die Pipettieröffnung abgegeben.

Es gibt Pipettiervorrichtungen, bei denen die Pipettenspitze mit der Hand vom Aufnahmeschaft abgezogen wird. Die meisten Pipettiervorrichtungen haben einen Abwerfer, der auf den oberen Rand der Pipettenspitze wirkt, um diese vom Aufnahmeschaft abzudrücken.

Die Pipettiervornchtung kann eine Handpipette oder eine Dosierstation sein, wobei die Gasverdrängungseinrichtung manuell oder motorbetrieben sein kann. Das Aufstecken und Abwerfen der Pipettenspitze kann ebenfalls manuell oder motorgetrieben geschehen.

Zur Vermeidung von Fehlpipettierungen muß die Pipettenspitze abdichtend auf dem Aufnahmeschaft fixiert sein. Außerdem dürfen die Kräfte für das Aufstecken und das Abwerfen der Pipettenspitze von dem Aufnahmeschaft nicht zu hoch sein. Der Kontaktbereich zwischen Pipettenspitze und Aufnahmeschaft ist ringförmig. Im ringförmigen Kontaktbereich ist die Pipettenspitze verhältnismäßig steif. Bereits hierdurch sind die Kräfte für das Aufstecken und Abwerfen vielfach sehr hoch. Beim Abwerfen geht der Kontaktbereich überall gleichzeitig von der Haft- auf die Gleitreibung über. Infolgedessen müssen für das Abwerfen vielfach sehr hohe Kräfte aufgebracht werden.

Davon ausgehend liegt der Erfindung die Aufgabe zugrunde, eine Pipettenspitze zu schaffen, bei der die Abwurfkräfte zum Lösen von einem Aufnahmeschaß reduziert sind und die eine erhöhte Flexibilität im Kopfbereich aufweist.

Die Aufgabe wird durch eine Pipettenspitze mit den Merkmalen des Anspruches 1 gelöst. Vorteilhafte Ausgestaltungen der Pipettenspitze sind in den Unteransprüchen angegeben.

Die erfindungsgemäße Pipettenspitze aus Kunststoff hat einen länglichen, rohrförmigen Körper, der an einem unteren Ende eine Pipettieröffnung, an einem oberen Ende eine Aufstecköffnung zum Aufstecken auf einen Aufnahmeschaft einer Pipettiervorrichtung, in der Nähe des oberen Endes einen entlang einer geschlossenen Kurve umlaufenden, in verschiedenen Umfangspositionen verschiedene Abstände von dem unteren Ende aufweisenden Steg, einen auf einer Rotationsfläche umlaufenden Kontaktbereich an der Innenseite des umlaufenden Steges und mindestens einen von mindestens einer maximal von dem unteren Ende entfernten Stelle des umlaufenden Steges bis zum oberen Ende erstreckten weiteren Steg aufweist.

Die erfindungsgemäße Pipettenspitze kommt mit dem auf einer Rotationsfläche umlaufenden Kontaktbereich an der Innenseite des umlaufenden Steges in abdichtenden Kontakt mit dem Aufnahmeschaft einer Pipettiervorrichtung. Die Rotationsfläche ist entweder an der Innenseite des Steges ausgebildet oder ist eine gedachte Rotationsfläche, die im Kontaktbereich mit der Innenseite des Steges zusammenfällt. Sie ist z.B. konisch oder zylindrisch. Der Aufnahmeschaft weist einen entsprechend ausgebildeten weiteren Kontaktbereich auf, der mit dem Kontaktbereich in abdichtenden Kontakt kommt.

Beim Abwerfen drückt der Abwerfer der Pipettiervorrichtung am oberen Ende der Pipettenspitze gegen den mindestens einen weiteren Steg. Durch den mindestens einen weiteren Steg wird die Abwurfkraft auf mindestens eine maximal vom unteren Ende entfernte Stelle des umlaufenden Steges übertragen. Hierdurch wird diese mindestens eine Stelle des umlaufenden Steges etwas zum unteren Ende hin gepreßt. Bezogen auf eine zum rohrförmigen Körper der Pipettenspitze rechtwinklig ausgerichtete Ebene wird der umlaufende Steg etwas flacher gedrückt. Der mindestens eine weitere Steg bildet einen steifen Bereich, der bei Übertragung von Kräften nur verhältnismäßig geringen Verformungen unterworfen ist. Da der umlaufende Steg quer zu dem mindestens einen weiteren Steg ausgerichtet ist, ist er durch die in Richtung des weiteren Steges eingeleiteten Kräfte verhältnismäßig leicht verformbar. Infolgedessen weitet sich der umlaufende Steg etwas auf und wird entsprechend die Haftreibung zwischen der Innenseite des umlaufenden Steges bzw. dem Kontaktbereich und dem Aufnahmeschaft reduziert. Somit werden die für das Lösen der Pipettenspitze von dem Aufnahmeschaft erforderlichen Abwurfkräfte reduziert. Außerdem ist die Pipettenspitze im Bereich des umlaufenden Steges flexibler, so daß auch die Kräfte für das Aufstecken auf einen Aufnahmeschaft reduziert werden und das Aufstecken auf Aufnahmeschäfte mit unterschiedlichen Abmessungen begünstigt wird.

Die Kurve, entlang der der umlaufende Steg verläuft, kann unterschiedliche Geometrien aufweisen. Gemäß einer Ausgestaltung hat der umlaufende Steg einen Verlauf entsprechend einer Sinuskurve oder einer Rechteckkurve oder eine Dreieckkurve oder einer Sägezahnkurve oder einer anderen periodischen Kurve. Die Rechteckkurve, Dreieckkurve oder Sägezahnkurve oder andere grundsätzlich Ecken aufweisende Kurven können auch an den Ecken abgerundet sein. Der umlaufende Steg erstreckt sich über eine oder mehrere Perioden auf dem Umfang. Bei Erstreckung über mehrere Perioden weist der umlaufende Steg mehrere maximal vom unteren Ende entfernte Stellen auf, in die über mehrere weitere Stege die Abwurfkraft symmetrisch in den umlaufenden Steg einleitbar ist. Hierdurch wird besonders vorteilhaft die Abwurfkraft reduziert und die Flexibilität gesteigert.

Gemäß einer Ausgestaltung hat der Kontaktbereich einen kreisringförmigen Verlauf oder einen Verlauf entsprechend dem Verlauf des umlaufenden Steges. So hat der Kontaktbereich z.B. den Verlauf einer Sinuskurve oder einer Rechteckkurve oder einer Dreieckkurve oder einer Sägezahnkurve oder einer anderen periodischen Kurve. Infolge der Anordnung des Kontaktbereiches auf einer Rotationsfläche ist die Pipettenspitze stets in beliebiger Drehstellung auf einen Aufnahmeschaft anordenbar.

Grundsätzlich kann die gesamte Innenseite des umlaufenden Steges der Kontaktbereich sein. Gemäß einer Ausgestaltung ist der Kontaktbereich linienförmig oder bandförmig, um eine hohe Pressung im Kontaktbereich zu erreichen. Der bandförmige Kontaktbereich kann sich über die gesamte Höhe des umlaufenden Steges (in Axialrichtung der Pipettenspitze gesehen) erstrecken oder nur über einen Teil davon.

Gemäß einer Ausgestaltung steht der umlaufende Steg und/oder der mindestens eine weitere Steg außen und/oder innen von dem Körper vor.

Gemäß einer Ausgestaltung ist die Innenseite des umlaufenden Steges konisch oder zylindrisch. Die konische oder zylindrische Form ist insbesondere für das Aufstecken auf einen konischen oder zylindrischen Aufnahmeschaft geeignet. Die Rotationsfläche, auf der der Kontaktbereich verläuft, ist vorzugsweise ebenfalls konisch oder zylindrisch.

Gemäß einer Ausgestaltung ist mindestens ein weiterer Steg parallel zur Achse des rohrförmigen Körpers und/oder dazu geneigt ausgerichtet.

Das obere Ende der Pipettenspitze kann unterschiedlich ausgestaltet sein. Gemäß einer Ausgestaltung ist das obere Ende plan oder weist einen Verlauf parallel zum umlaufenden Steg auf. Im letzteren Falle hat auch das obere Ende mindestens eine maximal vom unteren Ende entfernte Position, über die Abwurfkräfte gezielt einleitbar sind.

Gemäß einer Ausgestaltung, die der Einleitung der Abwurfkräfte in den mindestens einen weiteren Steg förderlich ist, ist der mindestens eine weitere Steg am oberen Ende mit einem weiteren umlaufenden Steg verbunden. Dieser kann ein planes oberes Ende oder ein zum umlaufenden Steg paralleles oberes Ende der Pipettenspitze bilden.

Gemäß einer Ausgestaltung sind zur Achse des rohrförmigen Körpers geneigte weitere Stege miteinander an maximal von dem unteren Ende entfernten Stellen des umlaufenden Steges und an am oberen Ende angeordneten Stellen verbunden. Über die Verbindungsstellen am oberen Ende werden die Abwurfkräfte in die weiteren Stege eingeleitet und von diesen auf die maximal von dem unteren Ende entfernten Stellen des umlaufenden Steges übertragen. Infolge der Neigung der weiteren Stege werden die Abwurfkräfte ähnlich wie bei einem Kniehebelgetriebe übertragen, so daß besonders hohe Kräfte in den umlaufenden Steg einleitbar sind.

Gemäß einer Ausgestaltung sind die geneigten weiteren Stege zu einem weiteren umlaufenden Steg miteinander verbunden. Damit bilden die geneigten weiteren Stege zugleich das obere Ende der Pipettenspitze.

Gemäß einer Ausgestaltung hat der Körper in einem flexibleren Axialbereich angrenzend an den umlaufenden Steg auf der dem unteren Ende zugewandten Seite eine geringere Wandstärke und/oder ein weicheres Material als in einem dem unteren Ende näheren Bereich. Der flexiblere Axialbereich begünstigt die Verformung des umlaufenden Steges durch die über den mindestens einen weiteren Steg eingeleiteten Abwurflcräfte und die Flexibilität im Dichtbereich.

Gemäß einer Ausgestaltung hat der Körper zwischen dem umlaufenden Steg und dem mindestens einen weiteren Steg und wahlweise dem weiteren umlaufenden Steg keine Wand oder eine geringere Wandstärke und/oder ein weicheres Material als zwischen dem unteren Ende und dem umlaufenden Steg oder dem flexibleren Axialbereich. Hierdurch wird die Kraftübertragung vom oberen Ende über den mindestens einen weiteren Steg begünstigt und das Abwerfen erleichtert und die Flexibilität gefördert.

Zur Abstützung des umlaufenden Steges oberhalb des flexibleren Axialbereiches und/oder zur Verbesserung der Abstreiffähigkeit im Spritzgießwerkzeug weist die Pipettenspitze gemäß einer Ausgestaltung noch weitere Stege auf, die von Stellen des umlaufenden Steges mit dem geringsten Abstand vom unteren Ende zu dem unteren Ende hin gerichtet sind. Bevorzugt erstrecken sich diese Stege im wesentlichen über den flexibleren Axialbereich.

Schließlich ist gemäß einer Ausgestaltung die Pipettenspitze einteilig aus mindestens einem Kunststoff hergestellt. Die Pipettenspitze ist vorteilhaft aus einem einzigen Kunststoff herstellbar, wobei die Flexibilität im Oberbereich durch Wandstärkenschwächungen bzw. -durchbrüche unterstützt wird. Ferner ist die Pipettenspitze vorteilhaft im Mehrkomponenten-Spritzgußverfahren aus mehreren verschiedenen Kunststoffen unterschiedlicher Steifigkeit bzw. Weichheit herstellbar.

Die Pipettenspitze wird nachfolgend anhand der anliegenden Zeichnungen von Ausfiihrungsbeispielen näher erläutert. In den Zeichnungen zeigen:
- Fig. 1a bis d: eine Pipettenspitze mit wellenförmig umlaufendem Steg und achsparallelen weiteren Stegen in einer perspektivischen Seitenansicht (Fig. 1a), in einer vergrößerten Detailansicht des oberen Endes aus derselben Perspektive (Fig. 1b), in einem vergrößerten Längsschnitt durch das obere Ende (Fig. 1c) und in demselben Schnitt in einer anderen Perspektive (Fig. 1d);
- Fig. 2a und b: eine Pipettenspitze mit einem weiteren umlaufenden Steg am oberen Ende in einem Längsschnitt durch das obere Ende (Fig. 2a) und in demselben Längsschnitt in einer anderen Perspektive (Fig. 2b);
- Fig. 3a und b: eine Pipettenspitze mit schräg gerichteten und miteinander zu einem weiteren umlaufenden Steg verbundenen weiteren Stegen in einer vergrößerten Seitenansicht des oberen Endes (Fig. 3a) und in einer Perspektivansicht schräg von oben auf das obere Ende (Fig. 3b).

Bei der nachfolgenden Beschreibung verschiedener Ausführungsbeispiele sind übereinstimmende Merkmale mit denselben Bezugsziffem bezeichnet.

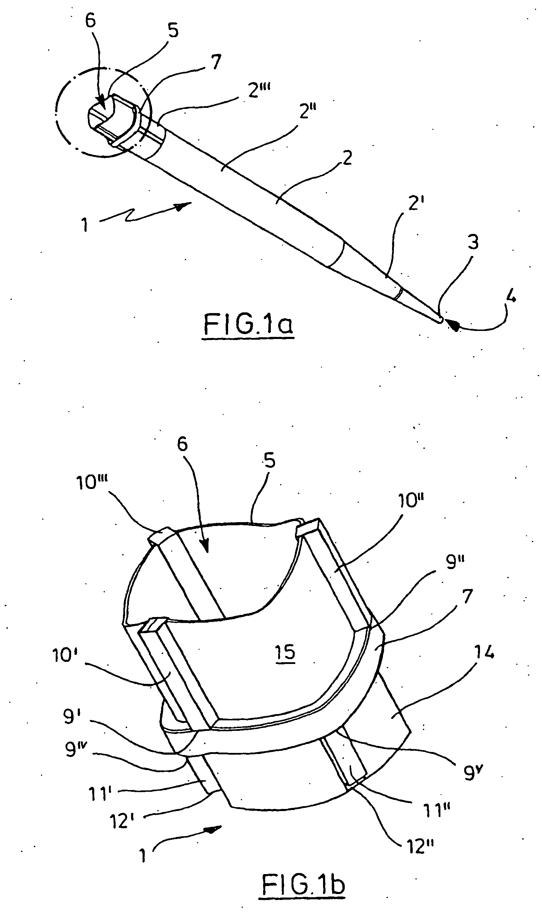

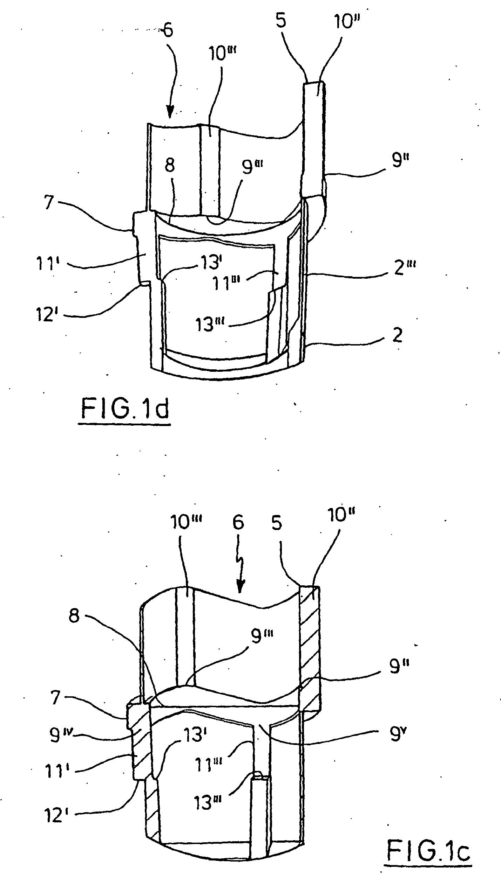

Gemäß Fig. 1 hat eine Pipettenspitze 1 einen länglichen, rohrförmigen Körper 2, der im Beispiel im wesentlichen einen konischen Anfangsabschnitt 2', einen zylindrischen Hauptabschnitt 2" und einen im folgenden noch näher erläuterten Kopfabschnitt 2'" aufweist.

An einem unteren Ende 3 hat der rohrförmige Körper 2 eine Pipettieröffnung 4 und an einem oberen Ende 5 eine Aufstecköffnung 6 zum Aufstecken auf den Aufnahmeschaft einer Pipettiervorrichtung.

Das untere Ende 3 der Pipettenspitze verdankt seine Bezeichnung der Tatsache, daß es im Gebrauch regelmäßig unten angeordnet ist, während die Bezeichnung des oberen Endes 5 darauf beruht, daß es sich im Gebrauch regelmäßig oben befindet.

In einem Abstand vom oberen Ende 5 hat der Kopfabschnitt 2'" einen entlang einer geschlossenen Kurve umlaufenden Steg 7. Der Steg 7 steht von der Außenseite und von der Innenseite des Körpers 2 etwas vor. Er ist im Querschnitt etwa rechteckförmig. Er hat einen wellenförmigen Verlauf, d.h. bezüglich einer senkrecht zur Längsachse der Pipettenspitze verlaufenden Ebene verläuft er wellen- bzw. sinusförmig. Im Beispiel erstreckt sich der Steg 7 über drei Perioden einer Sinusfunktion.

Am Innenumfang des Steges 7 ist ein kreisringförmiger Kontaktbereich 8 vorhanden, der als Linie ausgebildet ist.

Das obere Ende 5 hat einen zum Verlauf des umlaufenden Steges 7 parallelen Verlauf.

Ausgehend von den drei Maxima 9', 9", 9"' des umlaufenden Steges 7, d.h. den maximal vom unteren Ende 3 entfernten Positionen des umlaufenden Steges 7, verlaufen drei weitere Stege 10', 10", 10'" parallel zur Längsachse des rohrförmigen Körpers 2 bis zum oberen Ende 5. Die weiteren Stege 10', 10", 10'" stehen ebenfalls etwas von der Innen- und der Außenseite des Körpers 2 vor und haben einen etwa rechteckförmigen Querschnitt.

Ferner weist der Körper noch weitere axial verlaufende Stege 11', 11", 11'" auf, die von den drei Minima 9^{IV}, 9^{V}, 9^{VI}' der umlaufenden Stege 7 ausgehen, d.h. von den Positionen des umlaufenden Steges 7, die dem unteren Ende 3 am nächsten sind. Diese Stege 11', 11", 11'" erstrecken sich über den unteren Teil des Kopfbereiches 2"' bis zum Hauptabschnitt 2" und stehen auf beiden Seiten des Körpers 2 vor. Auch sie haben einen etwa rechteckförmigen Querschnitt. Außen sind sie unten von einer Stufe 12', 12", 12'" begrenzt und innen weisen sie eine Stufe 13', 13", 13'" auf. Die Stufen 12', 12", 12'" dienen zum Abstützen an den Lochrändern einer Haltevorrichtung ("Rack") und die Stufen 13`, 13", 13'" zum Begrenzen des Auf steckens auf einen Aufnahmeschaft.

Im Kopfabschnitt 2'" weist der Körper 2 auf beiden Seiten des umlaufenden Steges 7 zwischen den Stegen 10', 10", 10''' und 11', 11", 11'" eine im Vergleich zum Hauptabschnitt 2" reduzierte Wandstärke auf.

Bei Anbringung an einem Aufnahmeschaft einer Pipettiervorrichtung sorgt der kreisringförmige Kontaktbereich 8 für einen dichten und festen Sitz. Beim Andrücken eines Abwerfers gegen die oberen Enden der weiteren Stege 10' bis 10"'wird von diesen der umlaufende Steg 7 an den Maxima 9' bis 9"' nach unten gedrückt. Hierbei wird der umlaufende Steg 7 von den Stegen 11' bis 11'" an den Minima 9^{IV}, 9^{V}, 9^{VI} abgestützt. Infolgedessen wird die Innenseite des umlaufenden Steges 7 und damit der Kontaktbereich 8 aufgeweitet, wodurch die für das Abwerfen erforderlichen Abwurfkräfte verringert werden. Durch die verringerte Wandstärke im Kopfbereich 2'" werden die beschriebenen Verformungen erleichtert. Außerdem wird durch die erhöhte Flexibilität im Kopfbereich 2'" die für das Aufschieben auf einen Aufnahmeschaft erforderliche Kraft verringert, ferner wird das Aufschieben auf Aufnahmeschäfte mit unterschiedlichen Abmessungen begünstigt.

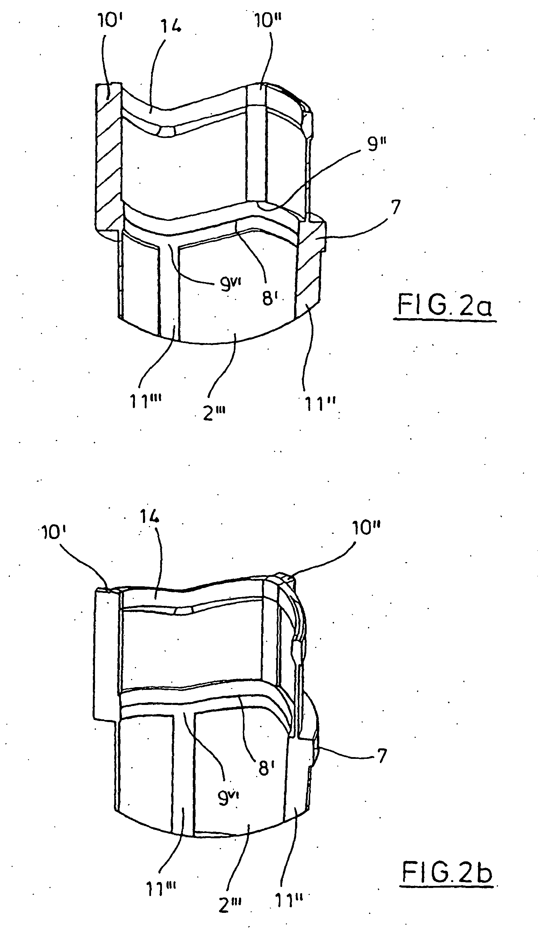

Die Ausführung von Fig. 2 unterscheidet sich von der vorbeschriebenen insbesondere dadurch, daß am oberen Ende 5 ein weiterer umlaufender Steg 14 vorhanden ist. Hierdurch wird die Krafteinleitung in die oberen Enden der Stege 10' bis 10'" verbessert. Außerdem folgt der Verlauf des Kontaktbereiches 8' dem sinusförmigen Verlauf des umlaufenden Steges 7. Der Kontaktbereich 8' ist auf einer konischen Rotationsfläche angeordnet. Z.B. ist die gesamte Innenseite des Steges 7 konisch.

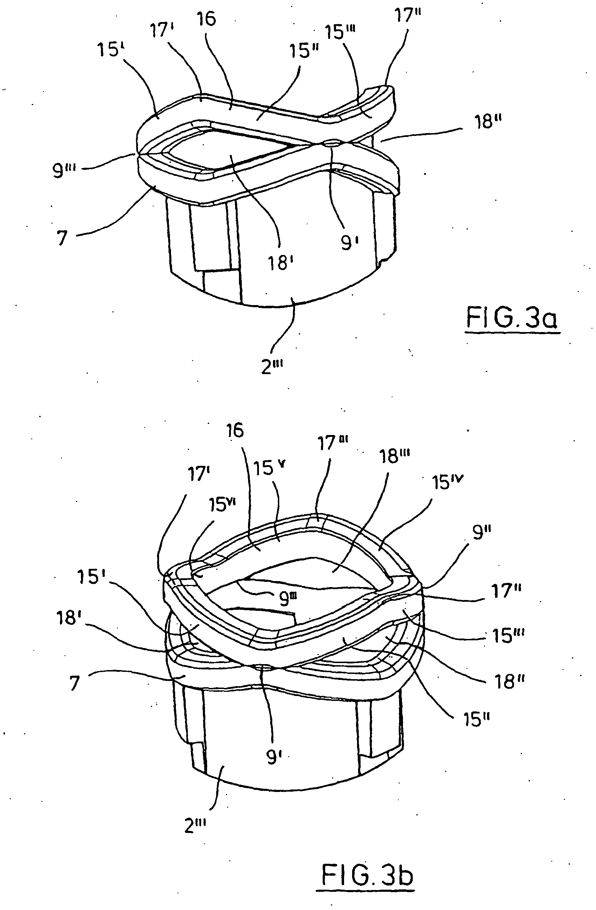

Die Ausfiihrung der Fig. 3 unterscheidet sich von den vorbeschriebenen dadurch, daß anstatt parallel zur Längsachse des Körpers 2 gerichteter weiterer Stege 10' bis 10"' zur Längsachse des Körpers 2 geneigte weitere Stege 15' bis 15^{VI} vorhanden sind. Diese sind jeweils an einem Ende mit einem Maximum 9' bis 9'" verbunden und an ihrem anderen Ende jeweils mit einem benachbarten weiteren Steg 15' bis 15^{VI}, so daß sie insgesamt einen weiteren umlaufenden Steg 16 bilden.

An den letztgenannten Verbindungsstellen 17' bis 17'" haben die geneigten weiteren Stege 15' bis 15^{VI} den weitesten Abstand vom unteren Ende 3. Dort ist ein Abwerfer ansetzbar, der über die geneigten weiteren Stege 15' bis 15^{VI} die Maxima 9' bis 9'" nach unten drückt und die Aufweitung an der Innenkontur des umlaufenden Steges 7 bewirkt. Diese Ausführung hat Freiräume 18', 18", 18'" zwischen dem umlaufenden Steg 7 und den geneigten Stegen 15` bis 15^{VI}, welche die Flexibilität im Kopfbereich 2'" zusätzlich erhöhen. Auf der anderen Seite des umlaufenden Steges 7 ist die Wandstärke des Kopfabschnittes 2'" geschwächt.

## Patentansprüche

1. Pipettenspitze aus Kunststoff mit einem länglichen; rohrförmigen Körper (2), der an einem unteren Ende (3) eine Pipettieröffnung (4), an einem oberen Ende (5) eine Aufstecköffnung (6) zum Aufstecken auf einen Aufnahmeschaft einer Pipettiervorrichtung, in der Nähe des oberen Endes (5) einen entlang einer geschlossenen Kurve umlaufenden, in verschiedenen Umfangspositionen verschiedene Abstände von dem unteren Ende aufweisenden Steg (7), einen auf einer Rotationsfläche umlaufenden Kontaktbereich (8) an der Innenseite des umlaufenden Steges (7) und mindestens einen von mindestens einer maximal von dem unteren Ende entfernten Stelle (9', 9", 9"') des umlaufenden Steges (7) bis zum oberen Ende (5) erstreckten weiteren Steg (10`, 10", 10''') aufweist.

2. Pipettenspitze nach Anspruch 1, bei der der umlaufende Steg (7) einen Verlauf entsprechend einer Sinuskurve oder einer Rechteckkurve oder einer Dreieckkurve oder einer Sägezahnkurve oder einer anderen periodischen Kurve aufweist.

3. Pipettenspitze nach Anspruch 1 oder 2, bei der der Kontaktbereich (8) einen kreisringförmigen Verlauf oder einen Verlauf entsprechend dem Verlauf des umlaufenden Steges (7) hat.

4. Pipettenspitze nach einem der Ansprüche 1 bis 3, bei der der Kontaktbereich (8) linienförmig oder bandförmig ist.

5. Pipettenspitze nach einem der Ansprüche 1 bis 4, bei der der umlaufende Steg (7) und/oder der mindestens eine weitere Steg (10', 10", 10"') außen und/oder innen von dem Körper (2) vorsteht.

6. Pipettenspitze nach einem der Ansprüche 1 bis 5, bei der die Innenseite des umlaufenden Steges (7) konisch oder zylindrisch ist.

7. Pipettenspitze nach einem der Ansprüche 1 bis 6, bei der der mindestens eine weitere Steg (10', 10", 10'") parallel zur Achse des rohrförmigen Körpers (2) und/oder dazu geneigt ausgerichtet ist.

8. Pipettenspitze nach einem der Ansprüche 1 bis 7, deren oberes Ende (5) plan ist oder einen Verlauf parallel zum umlaufenden Steg (7) aufweist.

9. Pipettenspitze nach einem der Ansprüche 1 bis 8, bei der der mindestens eine weitere Steg (10', 10", 10'") am oberen Ende (5) mit einem weiteren umlaufenden Steg (14) verbunden ist.

10. Pipettenspitze nach einem der Ansprüche 1 bis 9, bei der zur Achse des rohrförmigen Körpers (2) geneigte weitere Stege (15' bis 15^{VI}) miteinander an maximal von dem unteren Ende entfernten Stellen (9', 9", 9"') des umlaufenden Steges (7) und an am oberen Ende (5) angeordneten Stellen verbunden sind.

11. Pipettenspitze nach Anspruch 10, bei der die geneigten weiteren Stege (15' bis 15^{VI}) zu einem weiteren umlaufenden Steg (16) miteinander verbunden sind.

12. Pipettenspitze nach einem der Ansprüche 1 bis 11, deren Körper (2) in einem flexibleren Axialbereich (2'") angrenzend an den umlaufenden Steg (7) auf der dem unteren Ende (3) zugewandten Seite eine geringere Wandstärke und/oder ein weicheres Material als in einem dem unteren Ende (3) näheren Bereich (2) aufweist.

13. Pipettenspitze nach einem der Ansprüche 1 bis 12, deren Körper (2) zwischen dem umlaufenden Steg (7) und dem mindestens einen weiteren Steg (10' bis 10"') und wahlweise dem weiteren umlaufenden Steg (14) keine Wand oder eine geringere Wandstärke und/oder ein weicheres Material hat als zwischen dem unteren Ende (3) und dem umlaufenden Steg (7) oder dem flexibleren Axialbereich (2'").

14. Pipettenspitze nach einem der Ansprüche 1 bis 13, die noch weitere Stege (11 bis 11"') aufweist, die von Stellen (9^{IV}, 9^{V} 9^{VI}) des umlaufenden Steges (7) mit dem geringsten Abstand vom unteren Ende (3) zu dem unteren Ende (3) hin gerichtet sind.

15. Pipettenspitze nach einem der Ansprüche 1 bis 14, die einteilig aus mindestens einem Kunststoff hergestellt ist.

## Claims

1. Pipette tip made from plastics with an elongate, tubular body (2) which comprises at a lower end (3) a pipetting aperture (4), at an upper end (5) a placement aperture (6) for placement on a receiving shank of a pipetting device, in the vicinity of the upper end (5) a circumferential rib (7) along a closed curve, comprising different spacings from the lower end in different contour positions, a circumferential contact region (8) on a surface of revolution on the inner face of the circumferential rib (7) and at least one further rib (10', 10", 10"') extended from at least one position (9', 9", 9"') of the circumferential rib (7) at a maximum distance from the lower end as far as the upper end (5).

2. Pipette tip according to claim 1, in which the circumferential rib (7) has a path corresponding to a sine curve or a rectangular curve or a triangular curve or a sawtooth curve or a further periodic curve.

3. Pipette tip according to claim 1 or 2, in which the contact region (8) has a circular path or a path corresponding to the path of the circumferential rib (7).

4. Pipette tip according to any of claims 1 to 3, in which the contact region (8) is linear or strip-shaped.

5. Pipette tip according to any of claims 1 to 4, in which the circumferential rib (7) and/or the at least one further rib (10', 10", 10"') protrudes outwardly and/or inwardly from the body (2).

6. Pipette tip according to any of claims 1 to 5, in which the inner face of the circumferential rib (7) is conical or cylindrical.

7. Pipette tip according to any of claims 1 to 6, in which the at least further rib (10', 10", 10"') is positioned parallel to the axis of the tubular body (2) and/or inclined thereto.

8. Pipette tip according to any of claims 1 to 7, whose upper end (5) is planar or has a path parallel to the circumferential rib (7).

9. Pipette tip according to any of claims 1 to 8, in which the at least one further rib (10', 10", 10"') is connected at the upper end (5) to a further circumferential rib (14).

10. Pipette tip according to any of claims 1 to 9, in which the further ribs (15' to 15^{VI}) inclined toward the axis of the tubular body (2) are connected to one another at positions (9', 9", 9"') of the circumferential rib (7) at a maximum distance from the lower end and at positions arranged at the upper end (5).

11. Pipette tip according to claim 10, in which the inclined further ribs (15' to 15^{VI}) are connected to one another on a further circumferential rib (16).

12. Pipette tip according to any of claims 1 to 11, whose body (2) in a flexible axial region (2"') adjacent to the circumferential rib (7) on the face facing the lower end (3) has a smaller wall thickness and/or a softer material than in a region (2) closer to the lower end (3).

13. Pipette tip according to any of claims 1 to 12, whose body (2) between the circumferential rib (7) and the at least one further rib (10' to 10"') and optionally the further circumferential rib (14) has no wall or a smaller wall thickness and/or a softer material than between the lower end (3) and the circumferential rib (7) or the flexible axial region (2"').

14. Pipette tip according to any of claims 1 to 13, which comprises further ribs (11' to 11"'), which are oriented from positions (9^{IV}, 9^{V}, 9^{VI}) of the circumferential rib (7) at the smallest distance from the lower end (3) toward the lower end (3).

15. Pipette tip according to any of claims 1 to 14, which is manufactured integrally from at least one plastic material.

## Revendications

1. Embout pour pipette en matière plastique avec un corps oblong tubulaire (2) qui, à une extrémité inférieure (3), présente une ouverture de pipetage (4), à une extrémité supérieure (5), une ouverture d'emboîtement (6) pour l'emboîtement sur un bras récepteur d'un dispositif de pipetage, à proximité de l'extrémité supérieure (5), une entretoise (7) tournant le long d'une courbe fermée, présentant dans différentes positions périphériques différents écarts à l'extrémité inférieure, une zone de contact (8) tournant sur une surface de rotation, au niveau du côté intérieur de l'entretoise tournante (7), et au moins une autre entretoise (10', 10", 10"') s'étendant depuis au moins un emplacement (9', 9", 9"') de l'entretoise tournante (7) éloigné au maximum de l'extrémité inférieure jusqu'à l'extrémité supérieure (5).

2. Embout pour pipette selon la revendication 1, dans laquelle l'entretoise tournante (7) présente une allure correspondant à une courbe sinusoïdale ou à une courbe rectangulaire ou à une courbe triangulaire ou à une courbe en dents de scie ou à une autre courbe périodique.

3. Embout pour pipette selon la revendication 1 ou 2, dans laquelle la zone de contact (8) a une allure en forme d'anneau de cercle ou une allure correspondant à l'allure de l'entretoise tournante (7).

4. Embout pour pipette selon une des revendications 1 à 3, dans laquelle la zone de contact (8) est en forme de ligne ou en forme de bande.

5. Embout pour pipette selon une des revendications 1 à 4, dans laquelle l'entretoise tournante (7) et/ou une autre entretoise (10', 10", 10"'), au moins au nombre de un, fait saillie à l'extérieur et/ou à l'intérieur par rapport au corps (2).

6. Embout pour pipette selon une des revendications 1 à 5, dans lequel le côté intérieur de l'entretoise tournante (7) est conique ou cylindrique.

7. Embout pour pipette selon une des revendications 1 à 6, dans lequel l'autre entretoise (10', 10", 10"'), au moins au nombre de un, est orientée parallèlement à l'axe du corps (2) tubulaire et/ou est inclinée par rapport à celui-ci.

8. Embout pour pipette selon une des revendications 1 à 7, dont l'extrémité supérieure (5) est plane ou présente une allure parallèle à l'entretoise tournante (7).

9. Embout pour pipette selon une des revendications 1 à 8, dans laquelle l'autre entretoise (10', 10", 10"'), au moins au nombre de un, est, au niveau de l'extrémité supérieure (5), raccordée à une autre entretoise tournante (14).

10. Embout pour pipette selon une des revendications 1 à 9, dans laquelle d'autres entretoises (15' à 15^{VI}) inclinées par rapport à l'axe du corps (2) tubulaire sont raccordées entre elles au niveau d'emplacements (9', 9", 9"') de l'entretoise tournante (7) éloignés au maximum de l'extrémité inférieure et au niveau d'emplacements disposés au niveau de l'extrémité supérieure (5).

11. Embout pour pipette selon la revendication 10, dans laquelle les autres entretoises (15' à 15^{VI}) inclinées sont raccordées entre elles pour former une autre entretoise tournante (16).

12. Embout pour pipette selon une des revendications 1 à 11, dont le corps (2), dans une zone axiale plus flexible (2"') jouxtant l'entretoise tournante (7) sur le côté tourné vers l'extrémité inférieure (3), présente une épaisseur de paroi plus faible et/ou un matériau plus souple que dans une zone (2) plus proche de l'extrémité inférieure (3).

13. Embout pour pipette selon une des revendications 1 à 12, dont le corps (2), entre l'entretoise tournante (7) et l'autre entretoise (10', 10", 10"'), au moins au nombre de un, et au choix l'autre entretoise tournante (14), ne présente pas de paroi ou présente une épaisseur de paroi plus faible et/ou un matériau plus souple que entre l'extrémité inférieure (3) et l'entretoise tournante (7) ou la zone axiale plus flexible (2"').

14. Embout pour pipette selon une des revendications 1 à 13, qui présente encore d'autres entretoises (11' à 11"') qui sont dirigées vers l'extrémité inférieure (3) depuis des emplacements (9^{IV}, 9^{V}, 9^{VI}) de l'entretoise tournante (7) avec l'écart le plus faible à l'extrémité inférieure (3).

15. Embout pour pipette selon une des revendications 1 à 14, qui est fabriqué d'une seule pièce à partir d'au moins une matière plastique.
